# EUROPEAN PATENT APPLICATION

(11) **EP 4 836 400 A1**
(43) Date of publication of application: **04.11.2026**
(21) Application number: 25173510.6
(22) Date of filing: 30.04.2025
(51) Int. Cl.: H04N 19/117, H04N 19/136, H04N 19/17, H04N 19/176, H04N 19/182, H04N 19/186, H04N 19/85, H04N 19/86

(54) **ENCODING A VIDEO UTILIZING A REDUCED RANGE OF PIXEL VALUES**

(71) Applicant: Axis AB, 223 69 Lund (SE)
(72) Inventor: Edpalm, Viktor, 223 69 Lund (SE); Toresson, Alexander, 223 69 Lund (SE)
(74) Representative: AWA Sweden AB

(57) **Abstract**

The present disclosure relates to techniques for encoding a video utilizing a reduced range of pixel values. The techniques comprise defining (S502) a first pixel value range within the reduced range that leads to exaggerated differences when converted to a full range; identifying (S504) blocks where a threshold portion of pixels fall within this first pixel value range; determining (S510) basic compression values for all blocks; determining (S512) lowered compression values for the identified blocks by applying a predetermined offset to the basic values; and encoding (S514) the image frame using the lowered compression for the identified blocks and the basic compression for all other blocks.

## Description

### Technical Field

The present disclosure relates to video coding and more specifically to video encoding of a video utilizing a reduced range of pixel values.

### Background

Video standards such as BT.709, commonly used in HDTV systems, define how video should be encoded and displayed. The BT.709 standard defines the use of a reduced range for pixel values, typically from 16 to 235 for luma and 16-240 for chroma, rather than the full 0 to 255 range. This reduced range reserves headroom for signal processing and helps avoid clipping during transmission and display.

When a reduced range video is shown on a full range display, the display typically stretches the pixel values to fill the full 0-255 range (typically a conversion from the YCbCr space to the RGB space is also performed). This stretching can cause visible artifacts, especially in areas with gradual colour or brightness changes. For example, smooth gradients may appear uneven, with some steps in brightness appearing larger than others. This effect is most noticeable in darker regions of an image, where the eye is more sensitive to small differences.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method for encoding a video utilizing a reduced range of pixel values, where the reduced range is a subset of a full range possible to represent by a unit of information used for pixel values, the method comprising: defining a first pixel value range for pixels of the video at the reduced range, for which conversion from the reduced range to the full range of pixel values results in second pixel value range for the pixels of the video at the full range, wherein a span of the second pixel range is larger than a span of the first pixel range such that differences between pixel values within the first pixel value range are exaggerated when converted into the second pixel value range; identifying a first set of one or more blocks of an image frame of the video at the reduced range, where more than a predetermined threshold portion of pixels have pixel values within the first pixel value range; determining basic compression values for each block of the image frame; determining lowered compression values for each block of the first set of one or more blocks in the image frame, each lowered compression value being lower than the respective basic compression value by a predetermined compression offset; and encoding the image frame using the respective lowered compression value for the first set of one or more blocks and the respective basic compression value for all other blocks.

For example, if the reduced range is 16-235 and the full range is 0-255 (the reduced range is thus a subset of the full range), certain pixel value intervals within the reduced range, such as 31 to 32, may be stretched unevenly when converted to the full range. In this case, 31 and 32 might map to 17 and 19 respectively in the full range, causing what was a single-step difference in the reduced range to appear as a two-step difference after conversion. In other words, small differences in pixel values within certain parts of the reduced range become visually exaggerated when stretched to the full range. This distortion tends to occur at regular intervals, approximately every 7 steps in the reduced range in the above example.

As used herein, the term "differences between pixel values within the first pixel value range are exaggerated when converted into the second pixel value range" refers to the effect that occurs when pixel values encoded in a reduced range (e.g., 16-235) are converted into a full range (e.g., 0-255) through linear stretching. Due to the scaling factor between the two ranges, a single-step difference between two adjacent pixel values in the first pixel value range may result in a multi-step difference in the second pixel value range after conversion.

The inventors have realized that by identifying image areas where at least the predetermined threshold portion of pixel values fall within the first pixel value range known to cause exaggerated differences when stretched to a full range, and applying lower compression to those blocks, it is possible to preserve subtle variations and reduce the visibility of abrupt transitions between blocks. This selective compression approach smooths out tonal gradients and improves overall visual quality in the encoded video.

The use of the threshold (the predetermined threshold portion) enables the identification of flat image areas, where at least a threshold portion (such as 75%, 80%, 90%, etc.) of pixels can be assumed, or is determined, to lie within the first pixel value range. These areas may be more prone to visible artifacts such as banding (i.e., unwanted visible steps or stripes in areas that should appear as smooth gradients). By applying lower compression to such regions, the method helps preserve smooth gradients and reduces the risk of exaggerating the boundary between blocks in the first set and the remaining blocks, thereby improving visual quality when the video in the reduced range is later decoded.

In some examples, identifying a block of the first set of one or more blocks comprises: determining that an average of pixel values of the block is within a predetermined distance of the first pixel value range; and determining that a statistical distribution of pixel values of the block is below a predetermined distribution.

Using the average pixel value to check whether a block falls within the first pixel value range, or is within a predefined distance (e.g., 0-2 pixel value(s)) from the first pixel range, combined with evaluating whether the statistical distribution (e.g., variance) is below a predetermined threshold, may offer several advantages. Since average and variance are commonly computed during encoding, this example may be computationally efficient and avoid the overhead of explicitly checking each pixel against the first pixel value range and instead use the already available values, i.e., the average pixel value and variance. It may also reliably identify flat regions (low variance) within the problematic value range, where visual artifacts may be more likely to occur after range stretching.

In some examples, identifying a block of the first set of one or more blocks comprises: comparing a pixel value of each pixel with that of its closest neighbours, identifying transitions from one pixel value of the first pixel value range to another pixel value of the first pixel value range; and determining that a block is among the first set of one or more blocks if a number of identified transitions in it is above a predetermined number.

This method enables the identification of blocks with frequent transitions within the values of the first pixel value range, which may be particularly vulnerable to exaggeration when stretched to the full range.

In some examples, the pixel values are luma values, the reduced range of pixel values is a reduced range of luma values, and the first pixel value range defines luma pixel values. In these examples, each pixel value in the first pixel value range is below a predetermined darkness threshold of the reduced range of luma values.

By focusing on luma values below a predetermined darkness threshold, this example targets visually dark regions, where the human eye is especially sensitive to tonal inconsistencies. Artifacts such as banding may be more noticeable in these areas due to the low contrast and/or limited light variation.

In some examples, the pixel values are chroma values, the reduced range of pixel values is a reduced range of chroma values, and the first pixel value range defines chroma pixel values.

By targeting chroma values, this example may address colour banding artifacts, which can occur in areas with subtle colour transitions, such as skies, skin tones, or out-of-focus backgrounds. These regions may appear visually smooth but can still suffer from exaggerated colour steps when chroma values in the reduced range are stretched to the full range.

In some examples, the basic compression values and the lowered compression values are Quantization Parameter (QP) values. QP values may be supported by many video encoders. The QP value controls the degree of quantization applied during encoding, where higher QP means higher compression, while lower QP means less compression.

In some examples, the method further comprising: determining basic noise reduction values for each block of the image frame; determining lowered noise reductions values for each block of the first set of one or more bocks, each lowered noise reduction value being lower than the respective basic noise reduction value by a predetermined noise reduction offset; and applying noise reduction to the image frame, using the respective lowered noise reduction value for the first set of one or more blocks and the respective basic noise reduction value for all other blocks.

Applying lowered noise reduction before compression to the first set of blocks helps preserve subtle pixel variations that might otherwise be smoothed out, reducing the risk of banding or exaggerated transitions between blocks after range stretching.

In some examples, dithering is added to the first set of one or more blocks before encoding the image frame.

Adding dithering before encoding to the first set of blocks (and typically after any noise reduction is applied) helps break up visible banding by introducing controlled noise, making transitions between pixel values appear more gradual.

According to a second aspect of the disclosure, the above object is achieved by a device for encoding a video utilizing a reduced range of pixel values, where the reduced range is a subset of a full range possible to represent by a unit of information used for pixel values, the device comprising circuitry configured to execute: a defining function configured to define a first pixel value range for pixels of the video at the reduced range, for which conversion from the reduced range to the full range of pixel values results in second pixel value range for the pixels of the video at the full range, wherein a span of the second pixel range is larger than a span of the first pixel range such that differences between pixel values within the first pixel value range are exaggerated when converted into the second pixel value range; an identifying function configured to identify a first set of one or more blocks of an image frame of the video at the reduced range, where more than a predetermined threshold portion of pixels have pixel values within the first pixel value range; a basic compression determining function configured to determine basic compression values for each block of the image frame; a lowered compression determining function configured to determine lowered compression values for each block of the first set of one or more blocks in the image frame, each lowered compression value being lower than the respective basic compression value by a predetermined compression offset; and an encoding function configured to encode the image frame using the respective lowered compression value for the first set of one or more blocks and the respective basic compression value for all other blocks.

In some examples, the identifying function is further configured to identify a block of the first set of one or more pixel blocks if: an average of pixel values of the block is within a predetermined distance of the first pixel value range; and a statistical distribution of pixel values of the block is below a predetermined distribution.

In some examples, the device is a camera, and the camera further comprises an image sensor configured to capture image frames for the video.

In some examples, the device further comprises circuitry configured to execute a transmitting function configured to transmit the encoded image frames as an encoded video.

According to a second aspect of the disclosure, the above object is achieved by a device for encoding a video utilizing a reduced range of pixel values, where the reduced range is a subset of a full range possible to represent by a unit of information used for pixel values, the device comprising circuitry configured to execute: a defining function configured to define a first pixel value range for pixels of the video at the reduced range, for which conversion from the reduced range to the full range of pixel values results in second pixel value range for the pixels of the video at the full range, wherein a span of the second pixel range is larger than a span of the first pixel range such that differences between pixel values within the first pixel value range are exaggerated when converted into the second pixel value range; an identifying function configured to identify a first set of one or more blocks of an image frame of the video at the reduced range, where more than a predetermined threshold portion of pixels have pixel within the first pixel value range; a basic compression determining function configured to determine basic compression values for each block of the image frame; a lowered compression determining function configured to determine lowered compression values for each block of the first set of one or more blocks in the image frame, each lowered compression value being lower than the respective basic compression value by a predetermined compression offset; and an encoding function configured to encode the image frame using the respective lowered compression value for the first set of one or more blocks and the respective basic compression value for all other blocks.

In some examples, the identifying function is further configured to identify a block of the first set of one or more pixel blocks if: an average of pixel values of the block falls within the first pixel value range; and a statistical distribution of pixel values of the block is below a predetermined distribution.

In some examples, the device is a camera, and the camera further comprises an image sensor configured to capture image frames for the video.

In some examples, the device further comprises circuitry configured to execute a transmitting function configured to transmit the encoded image frames as an encoded video.

According to a third aspect of the invention, the above object is achieved by a system for handling a video utilizing a reduced range of pixel values, where the reduced range is a subset of a full range possible to represent by a unit of information used for pixel values, the system comprising: a transmitting device comprising a device according to the second aspect, configured to transmit an encoded video over a network; a receiving device comprising circuitry configured to receive the encoded video over the network and decode it to a decoded video; a display device comprising circuitry configured to display the decoded video.

In some examples, the circuitry of the receiving device is further configured to execute a range conversion function configured to convert pixel values of the decoded video from the reduced range to the full range of pixel values.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows conversion of pixel values between a reduced range and a full range according to embodiments;
Figure 2 shows compression values of blocks of pixels according to embodiments;
Figure 3 shows pixel values of an identified block of pixels, according to embodiments;
Figure 4 shows a system for handling a video utilizing a reduced range of pixel values, according to embodiments;
Figure 5 shows a flow chart of a method for encoding a video utilizing a reduced range of pixel values, according to embodiments

### Detailed Description

Some video encoding systems rely on standardized reduced pixel value ranges, such as those defined in BT.709, for encoding pixel values. These reduced ranges are intended to provide compatibility and headroom for processing. However, when such video signals are displayed on full-range devices, the reduced range pixel values are typically stretched to fit the full range of displayable values. This stretching can result in exaggerated differences between originally adjacent pixel values, especially in certain parts of the reduced range, leading to degraded visual quality.

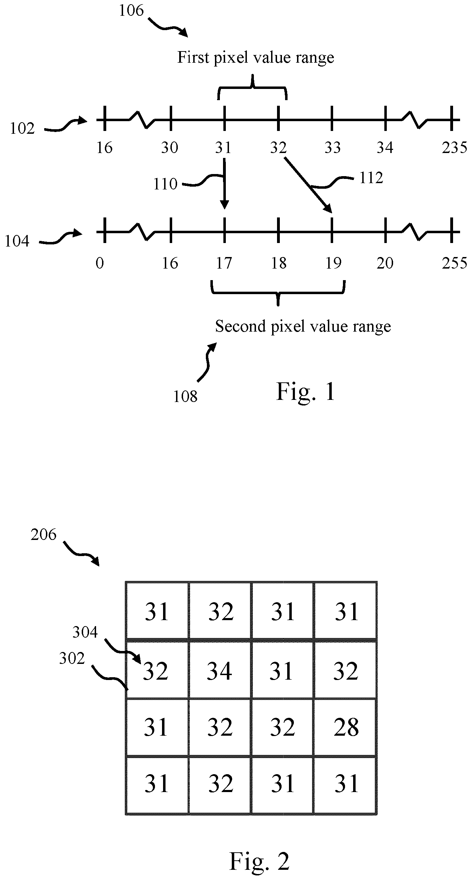

The present disclosure addresses this problem by adapting the compression applied to different parts of the image, based on whether a given region is likely to be affected by such exaggeration effects. In particular, blocks of an image frame where at least a predefined portion of pixel values fall within a problematic subrange of the reduced range are identified. These blocks are then encoded using lower compression values compared to other blocks of the image. Such a selective adjustment of compression help preserves important pixel-level detail, mitigates the appearance of visual artifacts, and thus improves the overall perceptual quality of the encoded video. Techniques for encoding and other handling of a video utilizing a reduced range of pixel values will now be described in conjunction with figures 1-5.

Figure 1 illustrates, by way of example, a reduced pixel value range 102, which forms a subset (or subrange) of a full pixel value range 104. In this example, the reduced range spans pixel values from 16 to 235, while the full range spans 0 to 255. The reduced range is commonly used in video encoding standards such as BT.709, which specifies limited-range encoding for compatibility and processing headroom.

While BT.709 (and the ranges of 16-235 and 0-255 used for 8-bit encoding) is referenced throughout this disclosure as a representative example of a standard employing a reduced pixel range (which may be different from the reduced range 102 in figure 1), it should be understood that the techniques described herein are equally applicable to any encoding standard that utilizes a reduced pixel value range on the encoder side. This includes, but is not limited to, BT.601 (used for SDTV), BT.2020 (used for UHDTV), and modern video codecs such as H.264/AVC, HEVC, AV1, and JPEG, all of which support limited range modes through metadata or format constraints. Accordingly, the techniques described herein may be applied broadly to enhance visual quality wherever a reduced pixel value range is employed on an encoding side. Moreover, the reduced range may vary depending on the type of pixel value, such that, for example, the reduced range used for chroma components may differ from the reduced range applied to luma components.

The difference between the reduced pixel value range and the full pixel value range can be used to identify one or more first pixel value ranges 106 within the reduced range 120. Each first pixel value range 106 may be considered problematic, in the sense that when pixel values within this range are converted 110, 112 to the full range 104, they produce a corresponding second (larger) pixel value range 108 in the full range 104.

As illustrated in Figure 1, the span of the second pixel value range 108 is greater than that of the first pixel value range 106, resulting in exaggerated differences between pixel values after conversion. For instance, a pixel value of 31 in the reduced range 102 may be converted to 17 in the full range 104, while a value of 32 is converted to the value of 19. Thus, what was originally a single-step difference (31 to 32) in the reduced range 102 becomes a multi-step difference (17 to 19) in the full range 104, potentially leading to visible artifacts such as banding in the final displayed image.

The identification of one or more problematic pixel value ranges within a reduced range 102 of pixel values can be based on the relationship between the reduced range 102 and the corresponding full range 104 of pixel values. The reduced range 102 is typically defined as a subset of the full range 102 and is intended to represent valid pixel values during encoding as discussed above. When these reduced values are later displayed on devices operating with a full pixel value range 104, a conversion, typically a linear scaling, is applied to map the reduced range 102 to the full range 104.

This scaling introduces non-uniform steps when mapping 110, 112 adjacent pixel values from the reduced range 102 into the full range 104. In particular, there are portions 106 of the reduced range 102 where a one-step change between two adjacent pixel values leads to a two-step or larger change in the full range 104, resulting in visually exaggerated transitions. These portions in the reduced range 102 are referred to herein as first pixel value ranges 106 or problematic pixel value ranges 106.

For example, consider a reduced pixel value range from 16 to 235, and a full pixel value range from 0 to 255, as in the example of figure 1. The reduced range 102 has 219 possible values, while the full range 104 has 256 values. When the reduced values are linearly scaled to fit the full range 104, the scaling factor becomes approximately 255 / 219 ≈ 1.164. This means that each step in the reduced range 102 maps 110, 112 to slightly more than one step in the full range 104. As a result, some pairs of adjacent values (such as 31 and 32) in the reduced range 102 will map 110, 112 to values in the full range 104 that are two or more steps apart (such as 17 and 19).

These types of stretches occur periodically across the reduced range 102. By analysing the mapping function, such as by multiplying pixel values in the reduced range by the scaling factor (e.g., approximately 1.164 in the case of mapping 16-235 to 0-255) and then applying a rounding operation (e.g., floor or ceiling) to obtain integer output values, regions of disproportionate (exaggerated) step size in the full range 104 can be identified. In particular, certain intervals 106 in the reduced range 102 will map to multi-step intervals 108 in the full range 104.

In the example where the reduced range spans from 16 to 235 and the full range spans from 0 to 255, this effect appears approximately every 7 steps. That is, for about every seven consecutive values in the reduced range 102, there is typically at least one pair of pixel values that results in a two-step difference in the full range 104.

In general, this analysis can be applied to any pair of reduced and full ranges, regardless of the specific values or bit depth used. The key is to identify intervals in the reduced range where the converted output range exhibits increased step size or nonuniformity, indicating areas prone to visual exaggeration of adjacent pixel values when displayed.

These identified ranges can then be used to guide encoding decisions such as compression adjustment, dithering, or noise reduction to improve visual quality as now will be described.

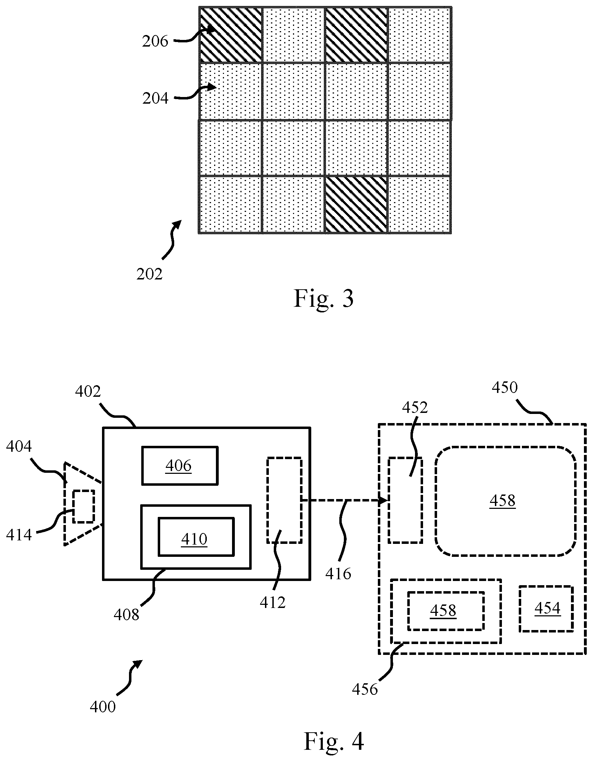

Figure 2 shows by way of example a block 206 of pixels. In video encoding, an image frame is typically divided into blocks 206, also referred to as coding blocks, macroblocks, or coding units, which are rectangular regions of pixels 302 processed together during e.g., compression (as will be further described below in conjunction with figure 3). These blocks serve as the basic units for operations such as transform, quantization, prediction, motion compensation, and also pre-processing steps such as noise reduction. This block-based structure enables efficient and localized control of both compression and image quality improvements during encoding. Each pixel 302 (i.e. a unit of information) has one or more associated pixel values 304. A pixel value may represent different types of image information depending on the encoding format and colour representation used. For example, the pixel value may correspond to a luma component (Y) representing brightness, one or more chroma components (Cb, Cr or U, V) representing colour differences, or colour channel values such as red, green, and blue (R, G, B) in an RGB-based format.

The pixel values 304 of the pixels 302 are used to determine whether block 206 is considered problematic, i.e., whether it belongs to the first set of blocks affected by stretching of pixel values from the reduced range to the full range, as described herein. Blocks identified in this way are more likely to exhibit visual artifacts due to exaggerated differences between pixel values after conversion.

A block 206 is considered problematic if it can be determined that more than a predetermined threshold portion of its pixels 302 have pixel values 304 within the first pixel value range. This can be determined by explicitly counting the number of pixels in the block whose values fall within the first pixel value range and then comparing that count to a threshold derived from the total number of pixels in the block. If the count exceeds the threshold, the block 206 is classified as part of the first set of blocks. This approach provides precise identification but may involve additional computational effort. However, this type of transition counting can be efficiently implemented in hardware.

In other embodiments, this classification is based on values already available during encoding, reducing computational overhead. In such cases, a block is considered problematic if two conditions are met:
(1) the average of the pixel values in the block is within a predetermined distance from the first pixel value range, and
(2) the statistical distribution of pixel values in the block (e.g., variance or standard deviation) is below a predetermined threshold, indicating a low level of variation.

This method efficiently identifies blocks with concentrated pixel values near problematic regions, often corresponding to flat or uniform areas where stretching artifacts are more noticeable, without requiring per-pixel evaluation.

The predetermined distance may be ranging from 0-2 pixel values for example. The predetermined threshold of the variance may be ranging from 1-2 for example. However, the threshold and distance may be context dependent and defined based on the application.

For example, in Figure 2, the pixel values of block 206 are: (31, 32, 31, 31, 32, 34, 32, 31, 32, 31, 32, 32, 28, 31, 32, 31, 31). These values have an average of approximately 31.3 and a variance of approximately 1.1, indicating that the values are both centred near (in this case within, i.e. a distance of 0) a problematic subrange and tightly clustered, making the block 206 a candidate for inclusion in the first set of blocks.

In yet other examples, this classification is based on detecting local transitions between pixel values within the block. Specifically, the method involves comparing each pixel value with that of its closest neighbours (e.g., adjacent pixels in horizontal and vertical directions), and identifying transitions from one pixel value to another, where both values fall within the first pixel value range. A block is then classified as part of the first set of blocks if the number of such identified transitions exceeds a predetermined threshold. Rather than relying on statistical metrics like average and variance, this method focuses on local structure and pattern changes within the pixel data. In the example of figure 2, number of transitions between pixel values within the first pixel value range (e.g., 31 to 32 or vice versa) is 11. These transitions occur between neighbouring pixels (either horizontally or vertically) where both values are within the specified range but are not equal. The threshold may be defined as a percentage or ratio, e.g., number of transitions divided by the number of pixels.

Moreover, similar to the pixel value counting operation described above, this type of transition counting can be efficiently implemented in hardware.

In some examples, the pixel values are luma values, the reduced range is a reduced range of luma values, and the first pixel value range defines a subrange of luma values. In such cases, the classification techniques (to identify a problematic block) described herein are applied specifically to luma information, which typically represents the brightness of each pixel and is important for perceived visual detail and contrast.

In further examples, the first pixel value range may be restricted to dark regions of the luma scale. That is, each pixel value in the first pixel value range is below a predetermined darkness threshold or contrast threshold within the reduced range of luma values. Artifacts such as banding or exaggerated block boundaries are often more noticeable in darker and/or low contrast areas. By focusing on these darker/low contrast luma values, the corrective measures described herein (compression, noise reduction, dithering) can be applied to where they are most likely to improve perceptual quality. This may reduce the impact on the bitrate of the encoded video that the lowered compression values result in.

In other examples, the pixel values are chroma values, the reduced range is a reduced range of chroma values, and the first pixel value range defines a subrange of chroma values. In such cases, the classification techniques (to identify a problematic block) described herein are applied specifically to chroma information.

Once a block 206 has been identified as problematic, various strategies may be applied to reduce the visual impact caused by the stretching of pixel values from the reduced range to the full range. This will now be described in conjunction with figure 3.

Figure 3 show by way of example an image frame 202 of a video at the reduced range as discussed above. The image frame comprises a plurality of blocks 204, 206 of pixels. The problematic blocks 206 are identified in figure 3 by a striped pattern. The remaining blocks 204 (not considered as problematic) are identified in figure 3 with a dotted pattern.

As discussed above, determining adaptive compression values of the blocks 204, 206 of the image frame 202 is an advantageous strategy for reducing the visual impact caused by the stretching of pixel values from the reduced range to the full range. For example, a basic compression value may be determined for each block 204, 206 of the image frame 202 based on standard encoding parameters such as bitrate targets, motion complexity, texture detail, etc. The basic compression value can differ between blocks 204, 206, reflecting the varying content characteristics across the image frame 202. These basic compression values reflect the default compression settings the encoder would apply to the blocks of the image under normal conditions, without accounting for the potential problems of converting the reduced range to the full range as discussed herein.

A lowered compression value is then determined for each of the problematic blocks 206 by reducing the basic compression value, i.e., the compression level that would otherwise be applied to the respective block, by a predetermined compression offset. The predetermined offset may be a fixed value, or it may be a proportional reduction (e.g., reducing a QP value with a fixed value as discussed below), where a predetermined rate is applied to the basic compression value.

The basic compression value and the lowered compression value may be defined as Quantization Parameter (QP) values. For example, a problematic block may have its QP value reduced by a fixed value of its basic value.

The image frame 202 is then encoded using the respective lowered compression value for the problematic blocks 206 and the respective basic compression value for all other blocks 204.

Additionally, or alternatively, other techniques may be applied to reduce the visual impact caused by the stretching of pixel values from the reduced range to the full range. One such technique involves adjusting noise reduction levels in a manner similar to the adaptive compression strategy described above. Specifically, basic noise reduction values may be determined for each block 204, 206 of the image frame 202 based on standard encoding criteria, such as block texture or motion activity.

For blocks 206 identified as problematic (i.e., blocks in the first set), lowered noise reduction values are determined by reducing the corresponding basic noise reduction values by a predetermined noise reduction offset. This offset may be fixed, or it may be a proportional reduction based on the respective basic noise reduction values determined for the block 206.

Noise reduction is then applied to the image frame by using the lowered noise reduction values for the problematic blocks 206 and the basic noise reduction values for all other blocks 204. This selective approach may help improving overall visual quality in the encoded video/image frame.

Yet another additional or alternative technique involves applying dithering to the problematic blocks 206 before encoding the image frame. Dithering introduces controlled noise to break up uniform areas or sharp transitions and may help improving overall visual quality in the encoded video/image frame.

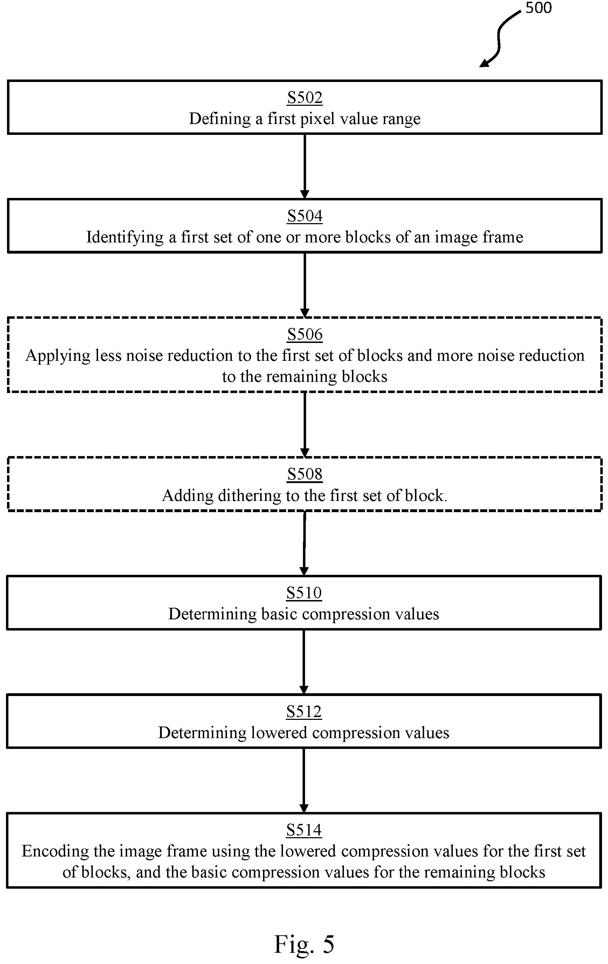

Figure 4 shows by way of example a device 402 configured to implement the techniques described herein. The device 402 may in some embodiments be a camera 404. The device 402 may in some embodiments be part of system 400 further comprising a client device 450 configured for receiving and displaying video 416 encoded by the device 402. Components and functionality of the device 402 and system 400 will now be exemplified in conjunction with the flow chart shown in figure 5.

The device 402 is thus for encoding a video utilizing a reduced range of pixel values, where the reduced range is a subset of a full range possible to represent by a unit of information used for pixel values. The device 402 comprises circuitry configured to execute functionality described herein. For example, the device may comprise a memory (non-transitory computer-readable media) 408 storing instructions 410 executable by one or more processors 406, wherein the instructions, when executed, cause the one or more processors to perform operations and functionality as described herein.

The operations may comprise a defining function configured to define S502 a first pixel value range for pixels of the video at the reduced range, for which conversion from the reduced range to the full range of pixel values results in a second pixel value range for the pixels of the video at the full range, wherein a span of the second pixel range is larger than a span of the first pixel range such that differences between pixel values within the first pixel value range are exaggerated when converted into the second pixel value range.

The operations may comprise an identifying function configured to identify S504 a first set of one or more blocks of an image frame of the video at the reduced range, where more than a predetermined threshold portion of pixels have pixel within the first pixel value range. The identifying function may implement techniques as described above in conjunction with figure 2.

The operations may comprise a basic compression determining function configured to determine S510 basic compression values for each block of the image frame.

The operations may comprise a lowered compression determining function configured to determine S512 lowered compression values for each block of the first set of one or more blocks in the image frame, each lowered compression value being lower than the respective basic compression value by a predetermined compression offset.

The operations may comprise an encoding function configured to encode S514 the image frame using the respective lowered compression value for the first set of one or more blocks and the respective basic compression value for all other blocks.

The basic compression determining function, the lowered compression determining function and the encoding function may implement techniques as described herein, for example as described above in conjunction with figure 3. The operations may further comprise functions for determining noise reductions values (basic and lowered) and functions for applying S506 noise reduction to the image frame, as described herein, for example as described above in conjunction with figure 3. The operations may further comprise functions for adding S508 dithering to the identified first set of one or more blocks as described herein, for example as described above in conjunction with figure 3.

The operations may comprise a transmitting function configured to transmit the encoded image frames as an encoded video 416. In these embodiments, the system 400 may comprise a transmitting device 412 (for example implemented in the device 402, or being a device 412 separate from the device 402) configured to transmit the encoded video 416 over a network, such as a local area network (LAN), the internet, or a wireless communication link. The transmitting device 412 may be implemented using a variety of hardware configurations, such as a dedicated network interface, a system-on-chip (SoC) with integrated transmission functionality, or a standalone networked device connected to the device 402. It may support wired or wireless communication protocols, including Ethernet, Wi-Fi, 4G/5G, or other suitable transport technologies, depending on the application context.

In the example where the device 402 is a camera 404, the camera 404 further comprises an image sensor 414 configured to capture image frames for the video.

The system 400 may further comprise a client device 452. Similar to the device 402, the client device 452 may comprises circuitry configured to execute functionality described herein. For example, the client device 452 may comprise a memory (non-transitory computer-readable media) 456 storing instructions 458 executable by one or more processors 454, wherein the instructions, when executed, cause the one or more processors 454 to perform operations and functionality as described herein.

These operations may comprise a receiving function configured to receive the encoded video 416 over the network and a decoding function configured to decode the received encoded video 416 to a decoded video. For this reason, the system 400 comprises a receiving device 452 (implemented in the client device 450 or as a standalone device) comprising circuitry configured to receive the encoded video 452 over the network. The receiving device 452 may be implemented using a variety of hardware configurations, such as a dedicated network interface, a system-on-chip (SoC) with integrated receiving functionality, or a standalone networked device connected to the client device 450. It may support wired or wireless communication protocols, including Ethernet, Wi-Fi, 4G/5G, or other suitable transport technologies, depending on the application context.

The client device 450 may further comprise a display 458. The operations implemented in the client device 450 may for this reason comprise a display function for displaying the decoded video on the display 458.

The operations implemented in the client device 450 may comprise a range conversion function configured for converting pixel values of the decoded video from the reduced range to the full range of pixel values.

The above embodiments are to be understood as illustrative examples of the disclosure. Further embodiments of the disclosure are envisaged. For example, the encoding and decoding may be performed using any coding standard, such as H.264/AVC, H.265/HEVC, AV1, VP9, VVC (H.266), or JPEG-based formats, among others. The techniques described herein are not limited to any particular codec and may be applied wherever pixel value ranges are used in combination with range-stretching display behaviour. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method (500) for encoding a video utilizing a reduced range (102) of pixel values, where the reduced range is a subset of a full range (104) possible to represent by a unit (302) of information used for pixel values, the method comprising:
defining (S502) a first pixel value range (106) for pixels of the video at the reduced range, for which conversion from the reduced range to the full range of pixel values results in a second pixel value range (108) for the pixels of the video at the full range, wherein a span of the second pixel range is larger than a span of the first pixel range such that differences between pixel values within the first pixel value range are exaggerated when converted into the second pixel value range;
identifying (S504) a first set of one or more blocks (206) of an image frame (202) of the video at the reduced range, where more than a predetermined threshold portion of pixels have pixel values within the first pixel value range;
determining (S510) basic compression values for each block (204, 206) of the image frame;
determining (S512) lowered compression values for each block of the first set of one or more blocks in the image frame, each lowered compression value being lower than the respective basic compression value by a predetermined compression offset; and
encoding (S514) the image frame using the respective lowered compression value for the first set of one or more blocks and the respective basic compression value for all other blocks (204).

2. The method of claim 1, wherein identifying a block of the first set of one or more blocks comprises:
determining that an average of pixel values of the block is within a predetermined distance from the first pixel value range; and
determining that a statistical distribution of pixel values of the block is below a predetermined distribution.

3. The method of claim 1, wherein identifying a block of the first set of one or more blocks comprises:
comparing a pixel value of each pixel with that of its closest neighbours, identifying transitions from one pixel value of the first pixel value range to another pixel value of the first pixel value range; and
determining that a block is identified among the first set of one or more blocks if a number of identified transitions in it is above a predetermined number.

4. The method of any one of the preceding claims, wherein the pixel values are luma values, the reduced range of pixel values is a reduced range of luma values, and the first pixel value range defines luma pixel values.

5. The method of claim 4, wherein each pixel value in the first pixel value range is below a predetermined darkness threshold of the reduced range of luma values.

6. The method of any one of claims 1-3, wherein the pixel values are chroma values, the reduced range of pixel values is a reduced range of chroma values, and the first pixel value range define chroma pixel values.

7. The method of any one of the preceding claims, wherein the basic compression values and the lowered compression values are Quantization Parameter values.

8. The method of any of the preceding claims, further comprising:
determining basic noise reduction values for each block of the image frame;
determining lowered noise reductions values for each block of the first set of one or more bocks, each lowered noise reduction value being lower than the respective basic noise reduction value by a predetermined noise reduction offset; and
applying (S506) noise reduction to the image frame, using the respective lowered noise reduction value for the first set of one or more blocks and the respective basic noise reduction value for all other blocks.

9. The method of any one of the preceding claims, wherein dithering is added (S508) to the first set of one or more blocks before encoding the image frame.

10. A device (402) for encoding a video utilizing a reduced range (102) of pixel values, where the reduced range is a subset of a full range (104) possible to represent by a unit (302) of information used for pixel values, the device comprising circuitry (406) configured to execute:
a defining function configured to define (S502) a first pixel value range (106) for pixels of the video at the reduced range, for which conversion from the reduced range to the full range of pixel values results in a second pixel value range (108) for the pixels of the video at the full range, wherein a span of the second pixel range is larger than a span of the first pixel range such that differences between pixel values within the first pixel value range are exaggerated when converted into the second pixel value range;
an identifying function configured to identify (S504) a first set of one or more blocks (206) of an image frame (202) of the video at the reduced range, where more than a predetermined threshold portion of pixels have pixel values within the first pixel value range;
a basic compression determining function configured to determine (S510) basic compression values for each block of the image frame;
a lowered compression determining function configured to determine (S512) lowered compression values for each block of the first set of one or more blocks in the image frame, each lowered compression value being lower than the respective basic compression value by a predetermined compression offset; and
an encoding function configured to encode (S514) the image frame using the respective lowered compression value for the first set of one or more blocks and the respective basic compression value for all other blocks.

11. The device of claim 10, wherein the identifying function is further configured to identify a block of the first set of one or more pixel blocks if:
an average of pixel values of the block within a predetermined distance of the first pixel value range; and
a statistical distribution of pixel values of the block is below a predetermined distribution.

12. The device of any one of claims 10-11, wherein the device is a camera (404), and the camera further comprises:
an image sensor (414) configured to capture image frames (202) for the video.

13. The device of any one of claims 10-12, further comprising circuitry configured to execute:
a transmitting function configured to transmit the encoded image frames as an encoded video (416).

14. A system (400) for handling a video utilizing a reduced range of pixel values, where the reduced range is a subset of a full range possible to represent by a unit of information used for pixel values, the system comprising:
a transmitting device comprising a device according to claim 13, configured to transmit the encoded video over a network;
a receiving device (452) comprising circuitry (454) configured to receive the encoded video over the network and decode it to a decoded video;
a display device (458) comprising circuitry (454) configured to display the decoded video.

15. The system of claim 14, wherein the circuitry of the receiving device is further configured to execute a range conversion function configured to convert pixel values of the decoded video from the reduced range to the full range of pixel values.

## Amended claims

### Amended claims in accordance with Rule 137(2) EPC.

1. A method (500) for encoding a video utilizing a reduced range (102) of pixel values, where the reduced range is a subset of a full range (104) possible to represent by a unit (302) of information used for pixel values, the method comprising:
defining (S502) a first pixel value range (106) for pixels of the video at the reduced range, for which it is identified based on a scaling factor associated with a conversion from the reduced range to the full range of pixel values, that the conversion results in a second pixel value range (108) for the pixels of the video at the full range, wherein a span of the second pixel value range is larger than a span of the first pixel value range, such that two adjacent pixel values in the first pixel value range are mapped (110, 112) to pixel values two or more steps apart in the second pixel value range;
identifying (S504) a first set of one or more blocks (206) of an image frame (202) of the video at the reduced range, where more than a predetermined threshold portion of pixels have pixel values within the first pixel value range;
determining (S510) basic compression values being default compression settings applied by an encoder for each block (204, 206) of the image frame;
determining (S512) lowered compression values for each block of the first set of one or more blocks in the image frame, each lowered compression value being lower than the respective basic compression value by a predetermined compression offset, wherein the compression offset is one of a fixed value reduction and a proportional reduction; and
encoding (S514) the image frame using the respective lowered compression value for the first set of one or more blocks and the respective basic compression value for all other blocks (204);
wherein the basic compression values and the lowered compression values are Quantization Parameter values.

2. The method of claim 1, wherein identifying a block of the first set of one or more blocks comprises:
determining that an average of pixel values of the block is within a predetermined distance from the first pixel value range; and
determining that a variance of pixel values of the block is below a predetermined variance.

3. The method of claim 1, wherein identifying a block of the first set of one or more blocks comprises:
comparing a pixel value of each pixel with that of its closest neighbours, identifying transitions from one pixel value of the first pixel value range to another pixel value of the first pixel value range; and
determining that a block is identified among the first set of one or more blocks if a number of identified transitions in it is above a predetermined number.

4. The method of any one of the preceding claims, wherein the pixel values are luma values, the reduced range of pixel values is a reduced range of luma values, and the first pixel value range defines luma pixel values.

5. The method of claim 4, wherein each pixel value in the first pixel value range is below a predetermined darkness threshold of the reduced range of luma values.

6. The method of any one of claims 1-3, wherein the pixel values are chroma values, the reduced range of pixel values is a reduced range of chroma values, and the first pixel value range define chroma pixel values.

7. The method of any of the preceding claims, further comprising:
applying (S506) noise reduction to the image frame, wherein less noise reduction is applied to the first set of one or more blocks than the noise reduction applied to all other blocks.

8. The method of any one of the preceding claims, wherein dithering is added (S508) to the first set of one or more blocks before encoding the image frame.

9. A device (402) for encoding a video utilizing a reduced range (102) of pixel values, where the reduced range is a subset of a full range (104) possible to represent by a unit (302) of information used for pixel values, the device comprising circuitry (406) configured to execute:
a defining function configured to define (S502) a first pixel value range (106) for pixels of the video at the reduced range, for which it is identified based on a scaling factor associated with a conversion from the reduced range to the full range of pixel values, that the conversion results in a second pixel value range (108) for the pixels of the video at the full range, wherein a span of the second pixel value range is larger than a span of the first pixel value range, such that two adjacent pixel values in the first pixel value range are mapped (110, 112) to pixel values two or more steps apart in the second pixel value range;
an identifying function configured to identify (S504) a first set of one or more blocks (206) of an image frame (202) of the video at the reduced range, where more than a predetermined threshold portion of pixels have pixel values within the first pixel value range;
a basic compression determining function configured to determine (S510) basic compression values being default compression settings applied by the device for each block of the image frame;
a lowered compression determining function configured to determine (S512) lowered compression values for each block of the first set of one or more blocks in the image frame, each lowered compression value being lower than the respective basic compression value by a predetermined compression offset, wherein the compression offset is one of a fixed value reduction and a proportional reduction; and
an encoding function configured to encode (S514) the image frame using the respective lowered compression value for the first set of one or more blocks and the respective basic compression value for all other blocks;
wherein the basic compression values and the lowered compression values are Quantization Parameter values.

10. The device of claim 9, wherein the identifying function is further configured to identify a block of the first set of one or more pixel blocks if:
an average of pixel values of the block within a predetermined distance of the first pixel value range; and
a statistical distribution of pixel values of the block is below a predetermined distribution.

11. The device of any one of claims 9-10, wherein the device is a camera (404), and the camera further comprises:
an image sensor (414) configured to capture image frames (202) for the video.

12. The device of any one of claims 9-11, further comprising circuitry configured to execute:
a transmitting function configured to transmit the encoded image frames as an encoded video (416).

13. A system (400) for handling a video utilizing a reduced range of pixel values, where the reduced range is a subset of a full range possible to represent by a unit of information used for pixel values, the system comprising:
a transmitting device comprising a device according to claim 12, configured to transmit the encoded video over a network;
a receiving device (452) comprising circuitry (454) configured to receive the encoded video over the network and decode it to a decoded video;
a display device (458) comprising circuitry (454) configured to display the decoded video.

14. The system of claim 13, wherein the circuitry of the receiving device is further configured to execute a range conversion function configured to convert pixel values of the decoded video from the reduced range to the full range of pixel values.
